# EUROPÄISCHE PATENTSCHRIFT

(11) **EP 2 314 838 B1**
(45) Veröffentlichungstag und Bekanntmachung des Hinweises auf die Patenterteilung: **29.07.2015**
(21) Anmeldenummer: 10187718.1
(22) Anmeldetag: 15.10.2010
(51) Int. Cl.: F01N 13/08, F01N 3/021, F01N 3/05

(54) **Vorrichtung zur Kühlung eines aus einem Rußpartikelfilter austretenden Abgasstroms**
Device for cooling an exhaust gas flow emitting from a particulate filter
Dispositif de refroidissement d'un flux de gaz d'échappement sortant d'un filtre à particule.

(30) Priorität: 15.10.2009 DE 102009045742
(43) Veröffentlichungstag der Anmeldung: 27.04.2011
(73) Patentinhaber: DEERE & COMPANY, Moline, Illinois 61265-8098 (US)
(72) Erfinder: Brunet, Romain, 68199, Mannheim (DE); Ochsner, Scott D., Cedar Falls, IA 50613 (US)
(74) Vertreter: Dehnhardt, Florian Christopher

(56) Entgegenhaltungen:
- EP-A1- 0 036 643
- EP-A2- 1 911 944

## Beschreibung

Die Erfindung betrifft eine Vorrichtung zur Kühlung eines aus einem Rußpartikelfilter austretenden Abgasstroms.

Die von der Europäischen Union erlassenen Abgasnormen sehen eine schrittweise Reduzierung der von Dieselmotoren erzeugten und mit dem Motorabgas in die Umgebung ausgestoßenen Rußpartikel vor. Die Beschränkung des Rußpartikelausstoßes erfolgt durch Verwendung von Rußpartikelfiltern, in der Regel mit sogenannten Wandstromfiltern, bei denen das Motorabgas eine poröse Filterwand aus einem keramischen oder metallischen Werkstoff durchdringt. Die im Motorabgas enthaltenen Rußpartikel lagern sich hierbei sowohl auf der Oberfläche als auch im Inneren der Filterwand ab, sodass der Abgasgegendruck mit zunehmendem Zusetzungsgrad der Filterwand ansteigt. Zur Regeneration des Rußpartikelfilters werden daher in regelmäßigen Zeitabständen die abgelagerten Rußpartikel verbrannt, wozu die Temperatur des Motorabgases - beispielsweise durch Verwendung eines dem Rußpartikelfilter vorgeschalteten Oxidationskatalysators - zeitweise auf Temperaturen über 500 °C erhöht wird. Während der Regeneration können am Endrohr der Abgasanlage (Auspuff) dementsprechend hohe Abgastemperaturen auftreten, die zur Entstehung unerwünschter Stickoxide führen können.

Vor diesem Hintergrund geht aus der DE 10 2008 051 958 A1 eine Vorrichtung zur Reduzierung der Temperatur eines aus einem Dieselpartikelfilter austretenden Abgasstroms hervor, wobei dem Abgasstrom während der Regeneration des Dieselpartikelfilters mittels einer Luftpumpe kühlere Umgebungsluft beigemischt wird. Aufgrund der elektrischen Steuerung der Luftpumpe ist die bekannte Vorrichtung vergleichsweise aufwendig aufgebaut.

Die EP 1 911 944 A2 offenbart einen Venturi-Mischer zur Kühlung eines aus einem Rußpartikelfilter austretenden Abgasstroms.

Es ist daher Aufgabe der vorliegenden Erfindung, eine Vorrichtung der eingangs genannten Art bezüglich ihres Aufbaus zu verbessern.

Diese Aufgabe wird durch eine Vorrichtung mit den Merkmalen des Patentanspruchs 1 gelöst.

Die erfindungsgemäße Vorrichtung zur Kühlung eines aus einem Rußpartikelfilter austretenden Abgasstroms umfasst einen an dem Rußpartikelfilter ausgebildeten Auslassstutzen zum Herausführen des Abgasstroms, wobei der Auslassstutzen einen sich in Richtung des Abgasstroms verjüngenden Mündungsbereich aufweist, der derart in ein offenes Ende eines angrenzenden Abgasrohrs hineinragt, dass in einem zwischen dem Auslassstutzen und dem Abgasrohr ausgebildeten und von einem Filterelement in Gestalt eines Lochgitters umgebenen Ansaugbereich bei Hindurchtreten des Abgasstroms ein Unterdruck gegenüber der Umgebung erzeugbar ist. Genauer gesagt erfolgt die Erzeugung des Unterdrucks nach dem Venturiprinzip, wobei sich der Mündungsbereich des Auslassstutzens düsenförmig in das offene Ende des Abgasrohrs erstreckt. Die aufgrund des Unterdrucks in das Abgasrohr gesaugte Umgebungsluft führt hierbei je nach deren Temperatur zu einer entsprechenden Abkühlung des Abgasstroms.

Da sich die erfindungsgemäße Vorrichtung nicht nur durch einen besonders einfachen, sondern zugleich auch durch einen überaus kompakten Aufbau auszeichnet, besteht die Möglichkeit, diese gemeinsam mit dem Rußpartikelfilter innerhalb eines Motorraums eines von einem Dieselmotor betriebenen Kraftfahrzeugs, insbesondere eines landwirtschaftlichen Nutzfahrzeugs, unterzubringen. Zur Kühlung des Dieselmotors dient üblicherweise ein im Motorraum des Kraftfahrzeugs angeordneter Hochtemperaturwärmetauscher, der Bestandteil eines mit dem Dieselmotor in Verbindung stehenden Flüssigkeitskühlkreislaufs ist, wobei der Hochtemperaturwärmetauscher mittels eines Lüfteraggregats mit Kühlluft beaufschlagt wird, die über einen Kühlergrill sowie nachgeordnete Filtereinschübe aus der Umgebung angesaugt wird. Da die solchermaßen in den Motorraum geleitete Luft weitgehend von Verunreinigungen befreit ist, wird ein unerwünschtes Zusetzen des zwischen dem Auslassstutzen und dem Abgasrohr ausgebildeten Ansaugbereichs weitgehend vermieden. Zusätzlich führt die seitens des Lüfteraggregats hervorgerufene Verdichtung der im Motorraum befindlichen Luft zu einem erhöhten Volumenstrom im Ansaugbereich und damit zu einer effizienteren Kühlung des Abgasstroms. Vorteilhafte Weiterbildungen gehen aus den Unteransprüchen hervor.

Vorzugsweise ist der Auslassstutzen mit einem Befestigungsflansch eines von dem Rußpartikelfilter umfassten Filtergehäuses lösbar verbunden. Demgemäß ist der Befestigungsflansch fester Bestandteil des Filtergehäuses und als solcher mit diesem verschweißt oder auf andere Weise fest verbunden. Der Auslassstutzen kann einen auf den Befestigungsflansch aufsteckbaren Befestigungsabschnitt aufweisen, der sich luftdicht mit dem Befestigungsflansch in Eingriff bringen lässt.
Die lösbare Verbindung zwischen dem Auslassstutzen und dem Befestigungsflansch des Filtergehäuses ist insbesondere mittels eines demontierbaren Federbügels herstellbar. Der Federbügel besteht hierbei aus einer rostfreien oder in entsprechender Weise oberflächenbehandelten Stahllegierung. In montiertem Zustand umgreift der Federbügel den Auslassstutzen im Bereich des Befestigungsabschnitts derart, dass sich durch Verkleinerung des Umfangs des Federbügels mittels einer Spannschraube oder dergleichen eine Klemmverbindung zwischen dem Auslassstutzen und dem Befestigungsflansch des Filtergehäuses herstellen lässt. Zur Verbesserung der Klemmwirkung kann der Auslassstutzen im Bereich des Befestigungsabschnitts eine Vielzahl von quer zum Federbügel verlaufenden Befestigungslaschen aufweisen.

Alternativ kann der Auslassstutzen auch fester Bestandteil des von dem Rußpartikelfilter umfassten Filtergehäuses sein. Der Auslassstutzen ist hierbei mit dem Filtergehäuse verschweißt oder auf andere Weise fest verbunden.

Vorzugsweise ist der Ansaugbereich als zwischen dem Auslassstutzen und dem Abgasrohr radial verlaufender Ringspalt ausgebildet. In diesem Fall weist sowohl der Auslassstutzen als auch das Abgasrohr zumindest im Ansaugbereich einen im Wesentlichen kreisförmigen Querschnitt auf.

Es hat sich herausgestellt, dass die Effizienz der Kühlung des Abgasstroms optimiert werden kann, wenn das Verhältnis zwischen einem äußeren Radius und einem inneren Radius des Ringspalts einen Wert im Bereich von 1.90 bis 2.10 aufweist. So lässt sich beispielsweise bei einem äußeren Radius von 60 Millimetern und einem inneren Radius von 29 Millimetern, entsprechend einem Verhältnis der beiden Radien von etwa 2.07, eine Reduzierung der Abgasstromtemperatur um mehr als 200 °C erzielen. Es sei allerdings angemerkt, dass die vorstehenden Angaben lediglich beispielhaften Charakter besitzen und in Abhängigkeit der jeweiligen Betriebsbedingungen mehr oder weniger abweichen können.

Vorzugsweise verläuft der Mündungsbereich des Auslassstutzens entlang seines gesamten Umfangs durchgehend in Abstand zum offenen Ende des Abgasrohrs. Mit anderen Worten ist der Mündungsbereich des Auslassstutzens gegenüber dem offenen Ende des Abgasrohrs freitragend angeordnet. Der Abstand wird derart gewählt, dass sich der Mündungsbereich des Auslassstutzens im Falle von zwischen dem Auslassstutzen und dem Abgasrohr auftretenden betriebsbedingten Schwingungen innerhalb des offenen Endes des Abgasrohrs bewegen kann, ohne dieses zu berühren. Hierdurch wird eine weitgehende mechanische Entkopplung der beiden Komponenten sichergestellt.

Zusätzlich besteht die Möglichkeit, dass das Filterelement in Richtung des Auslassstutzens verjüngt ausgebildet ist. Das Filterelement verjüngt sich nur insoweit, als im Falle von zwischen dem Auslassstutzen und dem Abgasrohr auftretenden betriebsbedingten Schwingungen eine gegenseitige Berührung der beiden Komponenten ausgeschlossen ist.

Der Ansaugbereich ist von einem Filterelement in Gestalt eines Lochgitters umgeben . Die Öffnungen des Lochgitters sind derart bemessen, dass vor allem gröbere Verunreinigungen, die zu einem raschen Zusetzen oder zu einem Verstopfen des Ansaugbereichs führen würden, zuverlässig zurückgehalten werden. Zur Erhöhung der Korrosionsbeständigkeit ist das Lochgitter aus einer aluminiumbeschichteten Stahllegierung oder dergleichen hergestellt.

Das Filterelement kann an dem offenen Ende des Abgasrohrs angeordnet sein und sich in Richtung des Auslassstutzens erstrecken. Genauer gesagt bildet das Filterelement eine an dem Abgasrohr angeordnete Verlängerung, die den Auslassstutzen über den Ansaugbereich hinaus entlang seines gesamten Umfangs kragenförmig umgibt.

Zusätzlich besteht die Möglichkeit, dass das Filterelement in Richtung des Auslassstutzens verjüngt ausgebildet ist. Das Filterelement verjüngt sich hierbei nur insoweit, als im Falle von zwischen dem Auslassstutzen und dem Abgasrohr auftretenden betriebsbedingten Schwingungen eine gegenseitige Berührung von Filterelement und Auslassstutzen ausgeschlossen ist.

Des Weiteren ist es denkbar, dass das Abgasrohr zumindest abschnittsweise von einem Berührungsschutz umgeben ist. Der Berührungsschutz weist insbesondere die Gestalt einer rohrförmigen Abdeckung auf, die mittels mehrerer Abstandshalter entlang der Außenseite des Abgasrohrs angebracht ist. Um eine übermäßige Erhitzung des Abgasrohrs zu vermeiden, kann die rohrförmige Abdeckung zumindest im Bereich eines Auspuffs eine Vielzahl von Öffnungen aufweisen, die eine Zirkulation der zwischen dem Abgasrohr und der rohrförmigen Abdeckung vorhandenen Luft ermöglichen.
Die erfindungsgemäße Vorrichtung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine perspektivische Gesamtansicht eines Ausführungsbeispiels der erfindungsgemäßen Vorrichtung zur Kühlung eines aus einem Rußpartikelfilter austretenden Abgasstroms an einem landwirtschaftlichen Nutzfahrzeug, und
- Fig. 2: eine Detailansicht des in Fig. 1 dargestellten Ausführungsbeispiels der erfindungsgemäßen Vorrichtung im Längsschnitt.

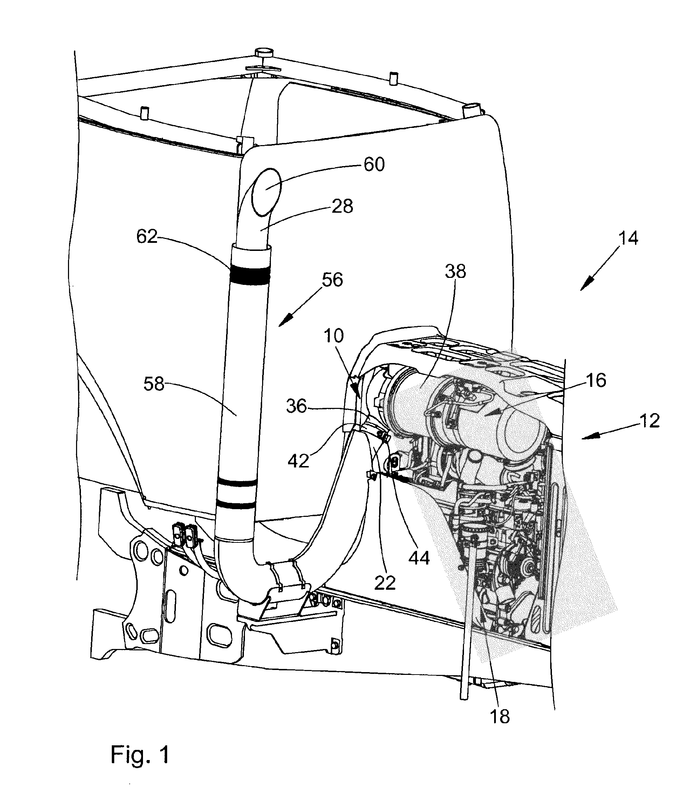

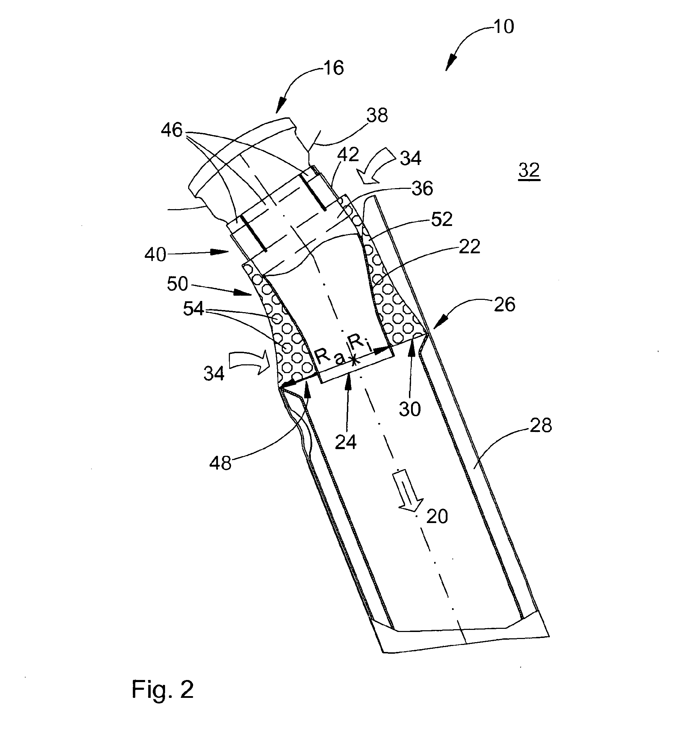

Fig. 1 zeigt eine perspektivische Gesamtansicht eines Ausführungsbeispiels der erfindungsgemäßen Vorrichtung zur Kühlung eines aus einem Rußpartikelfilter austretenden Abgasstroms an einem landwirtschaftlichen Nutzfahrzeug in Gestalt eines Traktors, wobei Fig. 2 eine Detailansicht der erfindungsgemäßen Vorrichtung im Längsschnitt wiedergibt.

Der gemeinsam mit der erfindungsgemäßen Vorrichtung 10 in einem Motorraum 12 des landwirtschaftlichen Nutzfahrzeugs 14 untergebrachte Rußpartikelfilter 16 ist im vorliegenden Fall als herkömmlicher Wandstromfilter ausgebildet, bei dem das von einem Dieselmotor 18 des landwirtschaftlichen Nutzfahrzeugs 14 erzeugte Motorabgas eine poröse Filterwand aus einem keramischen oder metallischen Werkstoff durchdringt. Die im Motorabgas enthaltenen Rußpartikel lagern sich hierbei sowohl auf der Oberfläche als auch im Inneren der Filterwand des Rußpartikelfilters 16 ab. Da der Abgasgegendruck mit zunehmendem Zusetzungsgrad der Filterwand ansteigt, werden die abgelagerten Rußpartikel zur Regeneration des Rußpartikelfilters 16 in regelmäßigen Zeitabständen verbrannt, wozu die Temperatur des Motorabgases durch Verwendung eines dem Rußpartikelfilter 16 vorgeschalteten Oxidationskatalysators zeitweise auf Temperaturen über 500 °C erhöht wird.

Zur Kühlung des aus dem Rußpartikelfilter 16 austretenden Abgasstroms 20 umfasst die erfindungsgemäße Vorrichtung 10 einen an dem Rußpartikelfilter 16 ausgebildeten Auslassstutzen 22 zum Herausführen des gefilterten Abgasstroms 20, wobei der Auslassstutzen 22 einen sich in Richtung des Abgasstroms 20 Verjüngenden Mündungsbereich 24 aufweist, der derart in ein offenes Ende 26 eines angrenzenden Abgasrohrs 28 hineinragt, dass in einem zwischen dem Auslassstutzen 22 und dem Abgasrohr 28 ausgebildeten Ansaugbereich 30 bei Hindurchtreten des Abgasstroms 20 ein Unterdruck gegenüber der Umgebung 32 erzeugbar ist.

Genauer gesagt erfolgt die Erzeugung des Unterdrucks nach dem Venturiprinzip, wobei sich der Mündungsbereich 24 des Auslassstutzens 22 düsenförmig in das offene Ende 26 des Abgasrohrs 28 erstreckt. Die aufgrund des Unterdrucks in das Abgasrohr 28 gesaugte Umgebungsluft 34 führt hierbei je nach deren Temperatur zu einer entsprechenden Abkühlung des Abgasstroms 20.

Der Auslassstutzen 22 ist mit einem Befestigungsflansch 36 eines von dem Rußpartikelfilter 16 umfassten Filtergehäuses 38 lösbar verbunden. Der Befestigungsflansch 36 ist fester Bestandteil des Filtergehäuses 38 und als solcher mit diesem verschweißt oder auf andere Weise fest verbunden. Der Auslassstutzen 22 weist einen auf den Befestigungsflansch 36 aufsteckbaren Befestigungsabschnitt 40 auf, der sich luftdicht mit dem Befestigungsflansch 36 in Eingriff bringen lässt.

Die lösbare Verbindung zwischen dem Auslassstutzen 22 und dem Befestigungsflansch 36 des Filtergehäuses 38 ist mittels eines demontierbaren Federbügels 42 hergestellt. Der Federbügel 42 besteht hierbei aus einer rostfreien oder in entsprechender Weise oberflächenbehandelten Stahllegierung. In montiertem Zustand umgreift der Federbügel 42 den Auslassstutzen 22 im Bereich des Befestigungsabschnitts 40 derart, dass sich durch Verkleinerung des Umfangs des Federbügels 42 mittels einer Spannschraube 44 eine Klemmverbindung zwischen dem Auslassstutzen 22 und dem Befestigungsflansch 36 des Filtergehäuses 38 herstellen lässt. Zur Verbesserung der Klemmwirkung weist der Auslassstutzen 22 im Bereich des Befestigungsabschnitts 40 eine Vielzahl von quer zum Federbügel 42 verlaufenden Befestigungslaschen 46 auf.

Gemäß einer alternativen Ausgestaltung der erfindungsgemäßen Vorrichtung 10 ist der Auslassstutzen 22 fester Bestandteil des von dem Rußpartikelfilter 16 umfassten Filtergehäuses 38.

Der Ansaugbereich 30 ist als zwischen dem Auslassstutzen 22 und dem Abgasrohr 28 radial verlaufender Ringspalt 48 ausgebildet, sodass sowohl der Auslassstutzen 22 als auch das Abgasrohr 28 zumindest im Ansaugbereich 30 einen im Wesentlichen kreisförmigen Querschnitt aufweisen.

Das Verhältnis zwischen einem äußeren Radius Rₐ und einem innerem Radius Rᵢ des Ringspalts 48 weist einen Wert im Bereich von 1.90 bis 2.10 auf. Vorzugsweise beträgt der äußere Radius Rₐ bzw. der innere Radius Rᵢ jeweils unter Berücksichtigung fertigungsüblicher Toleranzen 60 Millimeter bzw. 29 Millimeter, entsprechend einem Verhältnis Rₐ/Rᵢ der beiden Radien von etwa 2.07.

Der Mündungsbereich 24 des Auslassstutzens 22 verläuft entlang seines gesamten Umfangs durchgehend in Abstand zum offenen Ende 26 des Abgasrohrs 28. Der Abstand ist derart gewählt, dass sich der Mündungsbereich 24 des Auslassstutzens 22 im Falle von zwischen dem Auslassstutzen 22 und dem Abgasrohr 28 auftretenden betriebsbedingten Schwingungen innerhalb des offenen Endes 26 des Abgasrohrs 28 bewegen kann, ohne dieses zu berühren. Hierdurch wird eine weitgehende mechanische Entkopplung der beiden Komponenten 22, 28 erreicht.

Der Ansaugbereich 30 ist von einem Filterelement 50 in Gestalt eines Lochgitters 52 umgeben. Die Öffnungen 54 des Lochgitters 52 sind derart bemessen, dass vor allem gröbere Verunreinigungen, die zu einem raschen Zusetzen oder zu einem Verstopfen des Ansaugbereichs 30 führen würden, zuverlässig ferngehalten werden. Hierzu wird der Durchmesser der Öffnungen 54 kleiner als das Spaltmaß Rₐ-Rᵢ des Ansaugbereichs 30 gewählt. Zur Erhöhung der Korrosionsbeständigkeit ist das Lochgitter 52 aus einer aluminiumbeschichteten Stahllegierung hergestellt.

Das Filterelement 50 ist an dem offenen Ende 26 des Abgasrohrs 28 angeordnet und erstreckt sich in Richtung des Auslassstutzens 22. Genauer gesagt bildet das Filterelement 50 eine an dem Abgasrohr 28 angeordnete Verlängerung, die den Auslassstutzen 22 über den Ansaugbereich 30 hinaus entlang seines gesamten Umfangs kragenförmig umgibt.

Zusätzlich ist das Filterelement 50 in Richtung des Auslassstutzens 22 verjüngt ausgebildet. Das Filterelement 50 verjüngt sich hierbei nur insoweit, als im Falle von zwischen dem Auslassstutzen 22 und dem Abgasrohr 28 auftretenden betriebsbedingten Schwingungen eine gegenseitige Berührung von Filterelement 50 und Auslassstutzen 22 ausgeschlossen ist.

Gemäß Fig. 1 ist das Abgasrohr 28 zumindest abschnittsweise von einem Berührungsschutz 56 umgeben. Der Berührungsschutz 56 weist die Gestalt einer rohrförmigen Abdeckung 58 auf, die mittels mehrerer Abstandshalter entlang der Außenseite des Abgasrohrs 28 angebracht ist. Um eine übermäßige Erhitzung des Abgasrohrs 28 zu vermeiden, weist die rohrförmige Abdeckung 58 zumindest im Bereich eines Auspuffs 60 eine Vielzahl von Öffnungen 62 auf, die eine Zirkulation der zwischen dem Abgasrohr 28 und der rohrförmigen Abdeckung 58 vorhandenen Luft ermöglichen.

Auch wenn es sich bei dem in Fig. 1 dargestellten landwirtschaftlichen Nutzfahrzeug 14 beispielsgemäß um einen Traktor handelt, ist eine Verwendung der erfindungsgemäßen Vorrichtung 10 ebenfalls bei beliebigen anderen, von einem Dieselmotor angetriebenen Kraftfahrzeugen denkbar. Daneben bietet sich auch ein Einsatz im Falle stationärer Anwendungen, wie beispielsweise eines von einem Dieselmotor angetriebenen Stromaggregats oder dergleichen, an.

## Patentansprüche

1. Vorrichtung zur Kühlung eines aus einem Rußpartikelfilter austretenden Abgasstroms, **gekennzeichnet durch** einen an dem Rußpartikelfilter (16) ausgebildeten Auslassstutzen (22) zum Herausführen des Abgasstroms (20), wobei der Auslassstutzen (22) einen sich in Richtung des Abgasstroms (20) verjüngenden Mündungsbereich (24) aufweist, der derart in ein offenes Ende (26) eines angrenzenden Abgasrohrs (28) hineinragt, dass in einem zwischen dem Auslassstutzen (22) und dem Abgasrohr (28) ausgebildeten und von einem Filterelement (50) in Gestalt eines Lochgitters (52) umgebenen Ansaugbereich (30) bei Hindurchtreten des Abgasstroms (20) ein Unterdruck gegenüber der Umgebung (32) erzeugbar ist.

2. Vorrichtung nach Anspruch 1, **dadurch gekennzeichnet, dass** der Auslassstutzen (22) mit einem Befestigungsflansch (36) eines von dem Rußpartikelfilter (16) umfassten Filtergehäuses (38) lösbar verbunden ist.

3. Vorrichtung nach Anspruch 2, **dadurch gekennzeichnet, dass** die lösbare Verbindung zwischen dem Auslassstutzen (22) und dem Befestigungsflansch (36) des Filtergehäuses (38) mittels eines demontierbaren Federbügels (42) herstellbar ist.

4. Vorrichtung nach Anspruch 1, **dadurch gekennzeichnet, dass** der Auslassstutzen (22) fester Bestandteil eines von dem Rußpartikelfilter (16) umfassten Filtergehäuses (38) ist.

5. Vorrichtung nach einem der Ansprüche 1 bis 4, **dadurch gekennzeichnet, dass** der Ansaugbereich (30) als zwischen dem Auslassstutzen (22) und dem Abgasrohr (28) radial verlaufender Ringspalt (48) ausgebildet ist.

6. Vorrichtung nach Anspruch 5, **dadurch gekennzeichnet, dass** das Verhältnis zwischen einem äußeren Radius (Rₐ) und einem inneren Radius (Rᵢ) des Ringspalts (48) einen Wert im Bereich von 1.90 bis 2.10 aufweist.

7. Vorrichtung nach einem der Ansprüche 1 bis 6, **dadurch gekennzeichnet, dass** der Mündungsbereich (24) des Auslassstutzens (22) entlang seines gesamten Umfangs durchgehend in Abstand zum offenen Ende (26) des Abgasrohrs (28) verläuft.

8. Vorrichtung nach einem der Ansprüche 1 bis 7, **dadurch gekennzeichnet, dass** das Filterelement (50) an dem offenen Ende (26) des Abgasrohrs (28) angeordnet ist und sich in Richtung des Auslassstutzens (22) erstreckt.

9. Vorrichtung nach einem der Ansprüche 1 bis 8, **dadurch gekennzeichnet, dass** das Filterelement (50) in Richtung des Auslassstutzens (22) verjüngt ausgebildet ist.

10. Vorrichtung nach einem der Ansprüche 1 bis 9, **dadurch gekennzeichnet, dass** sich das Filterelement (50) in Richtung des Auslassstutzens (22) verjüngt.

11. Vorrichtung nach einem der Ansprüche 1 bis 10, **dadurch gekennzeichnet, dass** das Abgasrohr (28) zumindest abschnittsweise von einem Berührungsschutz (56) umgeben ist.

12. Kraftfahrzeug, insbesondere landwirtschaftliches Nutzfahrzeug, mit einer Vorrichtung (10) zur Kühlung eines aus einem Rußpartikelfilter (16) austretenden Abgasstroms (20) nach einem der Ansprüche 1 bis 11.

13. Kraftfahrzeug nach Anspruch 12, **gekennzeichnet durch** eine Unterbringung der Vorrichtung (10) in einem Motorraum (12).

## Claims

1. Device for cooling an exhaust gas stream emerging from a soot particle filter, **characterized by** an outlet connector (22) provided on the soot particle filter (16) for conveying out the exhaust gas stream (20), the outlet connector (22) comprising a mouth region (24) tapering in the direction of the exhaust gas stream (20), which region projects into an open end (26) of an adjacent exhaust gas pipe (28) in such a way that a reduced pressure relative to the surrounding environment (32) may be produced in a suction region (30), which is formed between the outlet connector (22) and the exhaust gas pipe (28) and which is surrounded by a filter element (50) in the form of a perforated mesh (52), on passage of the exhaust gas stream (20).

2. Device according to Claim 1, **characterized in that** the outlet connector (22) is connected detachably with a fastening flange (36) of a filter housing (38) surrounded by the soot particle filter (16).

3. Device according to Claim 2, **characterized in that** the detachable connection between the outlet connector (22) and the fastening flange (36) of the filter housing (38) may be produced by means of a removable spring clip (42).

4. Device according to Claim 1, **characterized in that** the outlet connector (22) is a fixed component of the filter housing (38) surrounded by the soot particle filter (16).

5. Device according to one of Claims 1 to 4, **characterized in that** the suction region (30) takes the form of an annular gap (48) extending radially between the outlet connector (22) and the exhaust gas pipe (28).

6. Device according to Claim 5, **characterized in that** the ratio between an outer radius (Rₐ) and an inner radius (Rᵢ) of the annular gap (48) has a value in the range from 1.90 to 2.10.

7. Device according to one of Claims 1 to 6, **characterized in that** the mouth region (24) of the outlet connector (22) extends throughout over its entire circumference at a distance from the open end (26) of the exhaust gas pipe (28).

8. Device according to one of Claims 1 to 7, **characterized in that** the filter element (50) is arranged at the open end (26) of the exhaust gas pipe (28) and extends in the direction of the outlet connector (22).

9. Device according to one of Claims 1 to 8, **characterized in that** the filter element (50) is tapered in the direction of the outlet connector (22).

10. Device according to one of Claims 1 to 9, **characterized in that** the filter element (50) tapers in the direction of the outlet connector (22).

11. Device according to one of Claims 1 to 10, **characterized in that** the exhaust gas pipe (28) is surrounded at least in places by a touch guard (56).

12. Motor vehicle, in particular an agricultural utility vehicle, having a device (10) according to one of Claims 1 to 11 for cooling an exhaust gas stream (20) emerging from a soot particle filter (16).

13. Motor vehicle according to Claim 12, **characterized by** the device (10) being accommodated in an engine compartment (12).

## Revendications

1. Ensemble de refroidissement d'un écoulement de gaz d'échappement sortant d'un filtre à particules de suie, **caractérisé par**
une tubulure de sortie (22) formée sur le filtre (16) à particules de suie pour évacuer l'écoulement (20) de gaz d'échappement,
la tubulure de sortie (22) présentant une partie d'embouchure (24) qui se rétrécit dans la direction de l'écoulement (20) de gaz d'échappement et qui pénètre dans une extrémité ouverte (26) d'un tube d'échappement (28) adjacent de telle sorte que lorsque l'écoulement (20) de gaz d'échappement traverse une partie d'aspiration (30) formée entre la tubulure de sortie (22) et le tube (28) à gaz d'échappement et entourée par un élément de filtre (50) qui présente la forme d'une grille perforée (52), une dépression par rapport à l'environnement (32) puisse être formée dans la partie d'aspiration.

2. Ensemble selon la revendication 1, **caractérisé en ce que** la tubulure de sortie (22) est reliée de manière libérable à une bride de fixation (36) d'un boîtier (38) de filtre entouré par le filtre (16) à particules de suie.

3. Ensemble selon la revendication 2, **caractérisé en ce que** la liaison libérable entre la tubulure de sortie (22) et la bride de fixation (36) du boîtier (38) de filtre peut être établie au moyen d'un étrier élastique démontable (42).

4. Ensemble selon la revendication 1, **caractérisé en ce que** la tubulure de sortie (22) fait partie intégrante d'un boîtier (38) de filtre entouré par le filtre (16) à particules de suie.

5. Ensemble selon l'une des revendications 1 à 4, **caractérisé en ce que** la partie d'aspiration (30) est configurée comme interstice annulaire (48) qui s'étend radialement entre la tubulure de sortie (22) et le tube (28) à gaz d'échappement.

6. Ensemble selon la revendication 5, **caractérisé en ce que** le rapport entre le rayon extérieur (Rₐ) et le rayon intérieur (Rᵢ) de l'interstice annulaire (48) présente une valeur comprise dans la plage de 1,90 à 2,10.

7. Ensemble selon l'une des revendications 1 à 6, **caractérisé en ce que** la partie d'embouchure (24) de la tubulure de sortie (22) s'étend sur toute sa périphérie à une distance de l'extrémité ouverte (26) du tube (28) à gaz d'échappement.

8. Ensemble selon l'une des revendications 1 à 7, **caractérisé en ce que** l'élément de filtre (50) est disposé sur l'extrémité ouverte (26) du tube (28) à gaz d'échappement et s'étend en direction de la tubulure de sortie (22).

9. Ensemble selon l'une des revendications 1 à 8, **caractérisé en ce que** l'élément de filtre (50) se rétrécit en direction de la tubulure de sortie (22).

10. Ensemble selon l'une des revendications 1 à 9, **caractérisé en ce que** l'élément de filtre (50) se rétrécit en direction de la tubulure de sortie (22).

11. Ensemble selon l'une des revendications 1 à 10, **caractérisé en ce que** le tube (28) à gaz d'échappement est entouré au moins partiellement par une protection contre le contact (56).

12. Véhicule automobile, en particulier véhicule utilitaire agricole, doté d'un ensemble (10) de refroidissement de l'écoulement de gaz d'échappement (20) sortant d'un filtre (16) à particules de suie selon l'une des revendications 1 à 11.

13. Véhicule automobile selon la revendication 12, **caractérisé par le fait que** l'ensemble (10) est placé dans un espace (12) prévu pour le moteur.
